Europäisches Patentamt

(19) European Patent Office

Office européen des brevets

(11) Publication number : **0 383 380 B1**

(12) **EUROPEAN PATENT SPECIFICATION**

(45) Date of publication of patent specification :
13.04.94 Bulletin 94/15

(51) Int. Cl.⁵ : **A23D 7/00**

(21) Application number : 90200284.9

(22) Date of filing : 08.02.90

(54) **Edible fat-containing products.**

(30) Priority : 17.02.89 EP 89200384

(43) Date of publication of application :
22.08.90 Bulletin 90/34

(45) Publication of the grant of the patent :
13.04.94 Bulletin 94/15

(84) Designated Contracting States :
AT BE CH DE DK ES FR GB GR IT LI NL SE

(56) References cited :
EP-A- 0 290 065
EP-A- 0 304 130
EP-A- 0 354 600

(73) Proprietor : UNILEVER N.V.
Weena 455
NL-3013 AL Rotterdam (NL)
(84) BE CH DE DK ES FR GR IT LI NL SE AT
Proprietor : UNILEVER PLC
Unilever House Blackfriars P.O. Box 68
London EC4P 4BQ (GB)
(84) GB

(72) Inventor : **Cain, Frederick William**
**Dr. Blookerstraat 12**
**NL-2271 VL Voorburg (NL)**
Inventor : **De Jong, Frederik Roelof**
**Van Boisotstraat 31**
**NL-3132 XK Vlaardingen (NL)**

(74) Representative : **Mulder, Cornelis Willem**
**Reinier, Dr. et al**
**UNILEVER N.V. Patent Division P.O. Box 137**
**NL-3130 AC Vlaardingen (NL)**

Jouve, 18, rue Saint-Denis, 75001 PARIS

## Description

The invention relates to edible fat-containing products comprising indigestible polyol fatty acid polyesters. In particular, the invention relates to edible fat-containing products which are fat-continuous and of low fat content, such as low-fat spreads.

Polyol fatty acid polyesters, and in particular, the sugar fatty acid polyesters, such as e.g. the sucrose fatty acid polyesters, are known as suitable low-calorie fat-replacers in edible products. Substantially indigestible for human beings they have physical and organoleptic properties very similar to triglyceride oils and fats conventionally used in edible products. Polyol fatty acid polyesters are also reported to have use as pharmaceutical agents e.g. in view of their ability to take up fat-soluble substances, such as in particular cholesterol, in the gastro-intestinal tract, and subsequently remove those substances from the human body. Accordingly, it is attractive to replace at least part of the fat in edible fat-containing products by polyol fatty acid polyesters. It is further reported that in food products the use of polyol fatty acid polyesters which are liquid at body temperature, may give rise to the so-called problem of anal leakage.

Edible fat-containing products comprising indigestible polyol fatty acid polyesters are known in the art, and described in eg U.S. Pat. Nos. 3,600,186, 4,005,195, 4,005,196, 4,034,083 and EP Pat. Publ. Nos. 0 233 856, 0 236 288, and 0 235 836.

EP-A-0 304 130 discloses edible fat-containing products, in particular spreads, having a fat-continuous phase comprising indigestible polyol fatty acid polyesters and optionally conventional glyceride fats. The fat-continuous phase is single-stream processed and has a solids profile of $N_5$ between 10 and 30, and $N_{35}$ below 2.5, the solids contribution to the $N_5$ from the polyol fatty acid polyesters being at least 25 %.

In this specification, unless otherwise indicated, the term 'fat' refers to edible fatty substances in a general sense, including natural or synthesized fats and oils consisting essentially of triglycerides such as, for example, soybean oil, sunflower oil, palm oil, coconut oil, fish oil, lard and tallow, which may have been partially or completely hydrogenated or modified otherwise, as well as non-toxic fatty materials having properties similar to triglycerides, which materials may be indigestible, such as for example waxes, e.g. jojoba oil and hydrogenated jojoba oil, and polyol fatty acid polyesters referred to hereinafter in more detail. The terms fat and oil are used interchangeably.

In this specification the term 'polyol' is intended to refer to any aliphatic or aromatic compound which comprises at least four free hydroxyl groups. Such polyols in particular include the group of sugar polyols, which comprises the sugars, i.e. the mono-, di- and polysaccharides, the corresponding sugar alcohols and the derivatives thereof having at least four free hydroxyl groups. Examples of sugar polyols include glucose, mannose, galactose, xylose, fructose, sorbose, tagatose, ribulose, xylulose, maltose, lactose, cellobiose, raffinose, sucrose, erythritol, mannitol, lactitol, sorbitol, xylitol and alpha-methylglucoside. A generally used and preferred sugar polyol is sucrose.

In this specification the term 'polyol fatty acid polyester' is intended to refer to any such polyesters or mixtures thereof of which, on an average, more than 70 % of the polyol hydroxyl groups have been esterified with fatty acids.

In this specification by 'indigestible' is meant that at least 70 % by weight of the material concerned is not digested by the human body.

Edible fat-continuous emulsion products such as low-fat spreads, have to comply with requirements such as oral response, stability, spreadability, melting behaviour and the like. It is an object of the present invention to provide edible fat-containing products of low fat content, in particular spreads, comprising indigestible polyol fatty acid polyesters, which products do not tend to loose water during storage, spreading etc. and which have a good oral response.

We have observed that in formulating very low fat spreads, the replacement of significant amounts of triglyceride fats by polyol fatty acid polyesters, even if the most important physical characteristics of the polyester blend seem comparable to the characteristics of the original triglyceride blend, is accompanied by primarily negative alterations in product properties. In fat-continuous products of very low fat content, comprising indigestible fatty acid polyesters, the incorporation of regular levels of high melting fat was found to yield unacceptably hard products which moreover exhibit water loss and/or products having a waxy and/or sticky mouthfeel. Throughout this application, unless indicated otherwise by high melting fat is meant a fat having a slip melting point of above 25°C. The high melting fat can, for instance, be a triglyceride fat or a polyol fatty acid polyester fat. The slip melting point is defined as the temperature at which the amount of solid phase in the melting fat has become so low that an air bubble is forced upwards in an open capillary filled with the fat.

We have found now that products of very low fat content, comprising a fat continuous phase and a substantial amount of an aqueous phase, exhibit a very good stability against water-loss in combination with a good oral response if the fat continuous phase contains a limited amount of one or more high melting polyol fatty acid polyesters and a substantial amount of an oil that is liquid at ambient temperature.

Accordingly, the present invention provides an edible fat-containing product comprising less than 35 wt.% of a fat-continuous phase comprising one or more indigestible polyol fatty acid polyesters and optionally triglycerides, and at least 65 wt.% of an aqueous phase, the fat-continuous phase containing from 5-24% by weight of said fat-continuous phase of polyol fatty acid polyester(s) having a slip melting point of more than 30°C and from 95-60% by weight of the fat-continuous phase of an oil having a slip melting point of less than 20°C, whereas the possible remaining fraction of the fatphase can consist of any other polyol fatty acid polyester and/or oil and the fat-continuous phase having an $N_5$-value of at most 14 and an $N_{20}$-value of at most 8.

The $N_t$-value whenever referred to in this application, is measured by the nuclear magnetic relaxation technique and is a direct measure of the level of solid fat content at temperature t. An appropriate procedure is described in Fette, Seifen, Anstrichmittel 80(5), 180-186 (1978). To some extent N-values of fats and fatty substances are dependent on the temperature history in the preparation of the samples for the N-value measurement. For the purposes of the present invention a suitable preparatory temperature history comprises heating the sample to 80°C, followed by 5 minutes at 60°C and 60 minutes at 0°C, whereafter the sample is held for 30 minutes at the temperature of the N-value measurement, subsequent to which said measurement is immediately carried out. It is to be understood that the N-values as referred to in this application relate to the total fat blend present in the product.

The fat phase of the product according to the invention is characterized in that it contains 5-24 wt.% of polyol fatty acid polyester(s) having a slip melting point of more than 30°C and from 95-60 wt.% of an oil having a slip melting point of less than 20°C, i.e. the fat phase is composed of at least two fat fractions, one fraction consisting of polyol fatty acid polyester(s), constituting from 5-24 wt.% of the fat phase, having a slip melting point of more than 30°C, and another fraction, constituting from 95-60 wt.% of the fat phase, having a slip melting point of less than 20°C, the possible remaining fraction having a slip melting point in the range of 20-30°C. Preferably the polyol fatty acid polyester(s) having a slip melting point of more than 30°C and the oil having a slip melting point of less than 20°C together constitute at least 90 wt.% of the fat phase, more preferably they constitute the complete fat phase of the present product.

In a preferred embodiment the present fat-continuous phase contains at least 5 wt.%, more preferably at least 8 wt.% of polyol fatty acid polyester(s) having a slip melting point in the range of 37-45°C.

The edible fat-containing products in accordance with the invention in general contain between 15 and 30 % by weight of a fat-continuous phase. The benefits of the present invention are particularly appreciated in products containing from 15-28 wt.% of a fat-continuous phase, products containing 15-27 wt.% of a fat-continuous phase being most preferred.

In a first and preferred aspect of the invention such products are spread compositions. For the purposes of the present invention the term 'spread composition' is intended to refer to any edible fat-containing food composition which is based upon a water-in-oil or oil-in-water-in-oil emulsion, and which comprises less than 35% by weight of a fat-continuous phase.

In a preferred embodiment of the invention, the product comprises a fat-continuous phase having an $N_{35}$ value of less than 2.0. Products having so low an $N_{35}$-value melt easily in the mouth and therefore do not give a thick mouthfeel as encountered in similar products having higher $N_{35}$ values. Furthermore preferably the fat continuous phase has an $N_{20}$-value in the range of 2.0-6.0 and an $N_5$-value in the range of 6.0-11.0. The latter ranges for the $N_{20}$- and $N_5$-values are very low in comparison to the figures normally found in prior art disclosures of very low fat spread formulations. Particularly preferred are edible fat containing products according to the invention which comprise a fat-continuous phase having an $N_5$-value of less than 10.0.

In an alternative embodiment the present invention encompasses edible fat product containing a fat-continuous phase having an $N_5$-value of more than 10.0. Preferably products according to this embodiment have an $N_{20}$-value in the range of 2.0-6.0.

The products of the invention suitably contain a substantial amount of polyol fatty acid polyester in addition to a significant amount of triglyceride fat. Preferably the present fat-continuous phase comprises at least 5% by weight triglycerides and at least 10% by weight polyol fatty acid polyesters. More preferably, the weight ratio in the fat-continuous phase between said one or more polyol fatty acid polyesters and said triglycerides lies within the range of from 10:90 and 75:25.

The polyol fatty acid polyesters which may suitably be used in the present invention, have been defined in general chemical terms hereinbefore. Preferably, polyol fatty acid polyesters derived from sugars or sugar alcohols are applied, and in particular, sugar fatty acid polyesters derived from disaccharides, such as sucrose.

The polyol fatty acid polyesters should be selected within the framework of the desired N-values of the fat-continuous phase at different temperatures, in particular in the range of 5 to 35°C, and the contribution thereto from the polyesters as defined before. To a considerable extent such a selection must take into account the relative proportion of the polyesters with respect to the conventional fat components and the solids profile thereby already introduced.

In general fatty acids per se or naturally occurring fats and oils may be used as source for the fatty acid residues in the polyol fatty acid polyesters. Conventional techniques may be used to introduce, if necessary, the required solids profile. Suitable techniques include full or partial hydrogenation, interesterification, transesterification and fractionation, and may be used before or after conversion of the polyols to polyol fatty acid polyesters. Suitable sources of the fatty acid residues are vegetable oils and fats, such as in particular soybean oil, (part of) which is modified to provide the resulting polyol fatty acid polyester with the required solids profile.

It should be understood that in general the polyol fatty acid polyester blend suitable for inclusion in the fat-continuous phase of the present compositions besides high-melting polyesters can also contain low-melting polyesters. It can thus be advantageous to obtain high-melting and low-melting fat fractions (i.e. fractions having high solids and low solids profiles) by fractionating a single fat blend, such as partially hardened soybean oil or a sugar polyester blend comprising both solid and liquid fractions, and combine the high-melting and low-melting fractions in the appropriate ratio in order to arrive at the required N-values of the fat-continuous phase.

In a preferred embodiment of the invention the one or more polyol fatty acid polyesters present in the product have a slip melting point of more than 30°C, in particular of from 37 to 45°C. It is to be understood that this slip melting point relates to the complete blend of polyol fatty acid polyesters present in the product.

In another preferred aspect of the invention polyol fatty acid polyesters are used which are completely or partly derived from trans-hydrogenated triglycerides or the corresponding lower alkylesters thereof, as described in EP 0 235 836. Alternatively, the desired level of trans fatty acid residues may also be introduced by first converting to the polyol fatty acid polyester and subsequent trans-hydrogenation.

As defined hereinbefore polyol fatty acid polyesters may be applied of which, on an average, more than 70 % of the polyol hydroxyl groups have been esterified with fatty acids. Preferably polyol fatty acid polyesters are used with higher degrees of conversion, in particular polyol fatty acid polyesters of which, on an average, more than 85 % or even over 95 % of the polyol hydroxyl groups have been esterified with fatty acids.

Preferably the solids contribution to the $N_{20}$-value by the one or more polyol fatty acid polyesters present in the fat-containing product, is at least 50%, more preferably it is at least 75%. In those instances where there are solids contributions to a particular N-value from several sources, i.e. from both one or more polyol fatty acid polyesters and one or more conventional glyceride fats, the split between such contributions is not easily measured. For the purposes of the present invention the solids contribution from the polyester component to the overall $N_t$-value is taken to be the $N_t$-value of a composition consisting of the same amount of that polyester component in sunflower oil.

As indicated hereinbefore in addition to the polyol fatty acid polyester the products of the invention generally comprise conventional oils and fats which may be of animal, fish, vegetable or dairy origin. Suitable triglyceride fats and oils include, optionally partially hydrogenated, interesterified or fractionated, coconut oil, palmkernel oil, palm oil, fish oils, lard, tallow fat, butter fat, soybean oil, safflower oil, cotton seed oil, rapeseed oil, poppy seed oil, corn oil, sunflower oil and mixtures thereof.

It has been well recognised that fat-containing products containing relatively large amounts of digestible unsaturated, in particular polyunsaturated fatty acid residues are attractive for their cholesterol-lowering effect. Such products are in particular those in which the fatty acid residues in the digestible part of the fat composition comprise less than 35 % of saturated fatty acid residues. A useful characteristic to scale fat-containing products for their cholesterol-lowering effect is the ratio of unsaturated to saturated fatty acid residues (UFA/SFA). In this context only fatty acid residues in digestible fats are considered. The higher this ratio, the stronger the cholesterol-lowering effect. Since linoleic acid is deemed to be the most effective unsaturated fatty acid as regards its blood cholesterol lowering effect, instead of the above ratio suitably the ratio of linoleic acid to saturated fatty acid residues (LA/SFA ratio) can be used.

Products in which in particular the conventional saturated triglyceride fat fraction is fully or partially replaced by indigestible polyol fatty acid polyesters, allow an appreciable and desirable increment in the UFA/SFA ratio. In the products according to the invention UFA/SFA ratios may be achieved of over 5, such as 6 to 8. If so desired LA/SFA ratios of over 6, or even of more than 8 can be obtained.

Fat-containing products, such as very low fat spreads, having a high amount of unsaturated components are naturally characterized by the presence of large amounts of liquid oil, which would be expected to lead to reduced product stability and hardness, in particular in case of products, like those presently claimed, that contain only limited amounts of solid fat even at temperatures as low as 5°C. The present products unexpectedly display a suitable hardness and are stable during storage even though they comprise only a very limited amount of so called hardstock. Preferably the triglycerides present in the product according to the invention comprise at least 80% by weight of a triglyceride oil that is fully liquid at 5°C.

The amount of polyunsaturated fatty acid residues, in particular linoleic acid residues, in the digestible part of the fat present in the product according to the invention, is preferably between 30 and 80 %, in particular at least 40 %, or even 60 % by weight of the total amount of digestible fatty acid residues present in the fat phase.

In the products according to the invention conventionally used fat- and water-soluble additives, such as emulsifiers, milk, proteins, preservatives, vitamins, in particular vitamins A, D and E, salt and flavour compounds, may be incorporated.

The spread compositions according to the present invention can be prepared by conventional processing. The ingredients are premixed and subsequently processed using conventional heat-exchanging/mixing units to cool, mix and work the spread compositions. Suitable processing devices for these purposes are well-known. Examples thereof are Votators™, crystallizers, resting tubes, pressure valves, static mixers and jet mixers. It is also possible to use cavity transfer mixers as described in WO-A 8 303 222.

The invention is now further illustrated with reference to the following examples.

Examples 1-3

Three fat-continuous spreads comprising 20% by weight fat were prepared using the following formulation:

| Ingredient | % by weight |
|---|---|
| Fat phase | 19.55 |
| Monoglyceride (Hymono 4404) | 0.3 |
| Salt | 1.4 |
| Beta carotene (0.4% in sunflower oil) | 0.15 |
| Potassium sorbate | 0.12 |
| Water | balance |
| pH adjusted to 5.1 with lactic acid | |

The fat phases of the three spread products were composed of the following components:

| | | |
|---|---|---|
| Partially hardened soybean oil (slip melting point 36°C) | : | Component A |
| Sunflower oil | : | Component B |
| Sucrose fatty acid polyester (fatty acid residues derived from touch-hardened soybean oil, slip melting point 28°C; degree of esterification over 95 %), slip melting point 10°C | : | Component C |
| Sucrose fatty acid polyester (fatty acid residues derived from 55 % fully hardened soybean oil, slip melting point 65°C, and 45 % touch-hardened soybean oil, slip melting point 28°C; degree of esterification over 95 %), slip melting point 42°C | : | Component D |

The exact composition (in % by weight of the fat phase) of the fat phase of the three spreads A, B and C was as follows:

|  | Spread A | Spread B | Spread C |
|---|---|---|---|
| Component A |  | 10 | 20 |
| Component B | 85 | 40 | 30 |
| Component C |  | 40 | 40 |
| Component D | 15 | 10 | 10 |

The spreads were prepared using the following method. First the monoglyceride emulsifier was dissolved in a mixture of the high melting fat components A and/or D heated to 60°C. Subsequently the low melting fat components B and/or C and the minor ingredients were mixed in and the fat blend was maintained at 60°C while stirring.

Separately, a water phase was prepared from initially boiled water, salt and potassium sorbate, and after cooling down to 60°C, adjusted to a pH of 5.1 with lactic acid.

The above fat phase and aqueous phase were fed in separate streams to a sequence of two cooled jacketed C-units and processed therethrough using shaft speeds of 1400 rpm. Both streams had a temperature of 60°C and were combined shortly before the first C-unit using a proportioning pump set to give a 20% fat emulsion at a throughput of 70 g/min. Before processing the two streams through the C-units, the line was flushed with oil.

The exit temperatures from the C-units and the solids content as determined by means of NMR, are represented below:

|  | Spread A | Spread B | Spread C |
|---|---|---|---|
| First C-unit |  |  |  |
| Exit temperature (°C) | 16 | 20 | 22 |
| Solids content (wt.%) | 2 | 2 | 3 |
| Second C-unit |  |  |  |
| Exit temperature (°C) | 12 | 18 | 17 |
| Solids content (wt.%) | 3 | 2 | 2 |

The physical properties of the spreads so obtained were investigated giving the following results:

|  | Spread A | Spread B | Spread C |
|---|---|---|---|
| $N_5$ | 11 | 9 | 14 |
| $N_{20}$ | 4 | 4 | 6 |
| $N_{35}$ | 0 | 0 | 1 |
| Stability towards water loss | stable | stable | little loose moisture |
| Oral response | good | good | little waxy |

Comparative Examples D-F

Three fat-continuous spreads comprising 20% by weight fat were prepared using the same formulation as given in examples 1-3, with the exception that the fat phases of spreads D, E and F were composed as follows:

|  | Spread D | Spread E | Spread F |
|---|---|---|---|
| Component A |  | 30 | 40 |
| Component B | 75 | 20 | 10 |
| Component C |  | 40 | 40 |
| Component D | 25 | 10 | 10 |

The spreads were prepared in exactly the same manner as described in examples 1-3, with the exception that the exit temperatures and solids content of the emulsions were as described below:

|  | Spread D | Spread E | Spread F |
|---|---|---|---|
| First C-unit | | | |
| Exit temperature (°C) | 22 | 21 | 21 |
| Solids content (wt.%) | 3 | 3 | 3 |
| Second C-unit | | | |
| Exit temperature (°C) | 15 | 17 | 16 |
| Solids content (wt.%) | 4 | 2 | 4 |

The physical properties of the spreads so obtained were investigated, giving the following results:

|  | Spread D | Spread E | Spread F |
|---|---|---|---|
| $N_5$ | 18 | 23 | 35 |
| $N_{20}$ | 9 | 11 | 19 |
| $N_{35}$ | 1 | 1 | 1 |
| Stability towards water loss | water loss | water loss | much water loss |
| Oral response | sticky | waxy and sticky | waxy and sticky |

Examples 4 and 5

Two fat-continuous spreads comprising 20% by weight fat were prepared using the following formulation:

| Ingredient | % by weight |
|---|---|
| Fat phase | 19.55 |
| Monoglyceride (Hymono 4404) | 0.3 |
| Salt | 1.4 |
| Beta carotene (0.4% in sunflower oil) | 0.15 |
| Potassium sorbate | 0.12 |
| Maltodextrin (Passelli SA2) | 11.6 |
| Gelatin | 1.6 |
| Flavour cocktail | |
| Water | balance |
| pH adjusted to 5.1 with lactic acid | |

The composition of the fat phases of spreads A and B were identical to that of respectively spreads A and B as described in examples 1-3.

The spread were prepared in exactly the same manner as described in examples 1-3 on the understanding that the gelatine and maltodextrin were premixed with the aqueous phase and with the exception that the first C-unit was rotated at shaft speed of 2500 rpm and the exit temperatures and solids content of the emulsions were as follows:

EP 0 383 380 B1

|  | Spread A | Spread B |
|---|---|---|
| First C-unit | | |
| Exit temperature (°C) | 22 | 26 |
| Solids content (wt.%) | 2 | 2 |
| Second C-unit | | |
| Exit temperature (°C) | 18 | 20 |
| Solids content (wt.%) | 3 | 3 |

Both spread A and spread B were found to have a relatively soft texture, did not loose water and exhibited a good flavour release. The N values of the spreads were virtually the same as those mentioned in examples 1-3 for spreads A and B.

## Claims

1. Edible fat-containing product comprising from 15 to 30 wt% of a fat-continuous phase comprising one or more indigestible polyol fatty acid polyesters and optionally triglycerides, and at least 65 wt.% of an aqueous phase, the fat-continuous phase containing from 5-24% by weight of said fat-continuous phase of polyol fatty acid polyester(s) having a slip melting point of more than 30°C and from 95-60% by weight of the fat-continuous phase of an oil having a slip melting point of less than 20°C, whereas the possible remaining fraction of the fatphase can consist of any other polyol fatty acid polyester and/or oil and the fat-continuous phase having an $N_5$-value of at most 14 and an $N_{20}$-value of at most 8.

2. Product according to claim 1, wherein the fat-continuous phase has an $N_{35}$ value of less than 2.0.

3. Product according to claim 1 or 2 wherein the fat continuous phase has an $N_{20}$-value in the range of 2.0-6.0 and an $N_5$-value in the range of 6.0-11.0.

4. Product according to any one of claims 1-3, wherein the fat-continuous phase has an $N_5$-value of less than 10.

5. Product according to claim 1 or 2, wherein the fat-continuous phase has an $N_5$-value of more than 10.

6. Product according to any one of the preceding claims wherein the weight ratio in the fat-continuous phase between said one or more polyol fatty acid polyesters and said triglycerides lies within the range of from 10:90 and 75:25.

7. Product according to any one of the preceding claims wherein the solids contribution to the $N_{20}$-value by said one or more polyol fatty acid polyesters is at least 50%.

8. Product according to any one of the preceding claims wherein the triglycerides present in the product comprise at least 80% by weight of a triglyceride oil that is fully liquid at 5°C.

## Patentansprüche

1. Eßbares, Fett enthaltendes Produkt, das 15 bis 30 Gew.-% einer fettkontinuierlichen Phase, die einen oder mehrere unverdauliche Polyolfettsäurepolyester und fakultativ Triglyceride umfaßt, und mindestens 65 Gew.-% einer wäßrigen Phase umfaßt, wobei die fettkontinuierliche Phase 5 bis 24 Gew.-%, bezogen auf die fettkontinuierliche Phase, eines oder mehrerer Polyolfettsäurepolyester mit einem Steigschmelzpunkt von mehr als 30°C und 95 bis 60 Gew.-%, bezogen auf die fettkontinuierliche Phase, eines Öles mit einem Steigschmelzpunkt von weniger als 20°C enthält, während die mögliche verbleibende Fraktion der Fettphase aus jedem anderen Polyolfettsäurepolyester und/oder Öl bestehen kann und die fettkontinuierliche Phase einen $N_5$-Wert von höchstens 14 und einen $N_{20}$-Wert von höchstens 8 hat.

2. Produkt nach Anspruch 1, in dem die fettkontinuierliche Phase einen $N_{35}$-Wert von weniger als 2,0 hat.

8

3. Produkt nach Anspruch 1 oder 2, in dem die fettkontinuierliche Phase einen $N_{20}$-Wert im Bereich von 2,0 bis 6,0 und einen $N_5$-Wert im Bereich von 6,0 bis 11,0 hat.

4. Produkt nach irgendeinem der Ansprüche 1 bis 3, in dem die fettkontinuierliche Phase einen $N_5$-Wert von weniger als 10 hat.

5. Produkt nach Anspruch 1 oder 2, in dem die fettkontinuierliche Phase einen $N_5$-Wert von mehr als 10 hat.

6. Produkt nach irgendeinem der vorhergehenden Ansprüche, in dem das Gewichtsverhältnis in der fettkontinuierlichen Phase zwischen dem einen oder mehreren Polyolfettsäurepolyester(n) und den Triglyceriden im Bereich von 10:90 und 75:25 liegt.

7. Produkt nach irgendeinem der vorhergehenden Ansprüche, in dem der Feststoffbeitrag durch den einen oder mehrere Polyolfettsäurepolyester zum $N_{20}$-Wert mindestens 50 % beträgt.

8. Produkt nach irgendeinem der vorhergehenden Ansprüche, in dem die im Produkt vorliegenden Triglyceride mindestens 80 Gew.-% eines Triglyceridöles, das bei 5°C völlig flüssig ist, umfassen.

## Revendications

1. Une composition contenant des graisses alimentaires comprenant de 15 à 30 % en masse d'une phase de graisse continue comprenant un ou plusieurs polyesters d'acides gras et de polyol indigestes et de façon optionnelle des triglycérides, et au moins 65 % en masse d'une phase aqueuse, la phase de graisse continue contenant de 5 à 24 % en masse de ladite phase de graisse continue de polyester(s) d'acides gras et de polyol ayant un point de fusion glissant supérieur à 30° C et de 95 à 60 % en masse de la phase de graisse continue d'une huile ayant un point de fusion glissant inférieur à 20° C, tandis que l'éventuelle fraction restante de la phase grasse peut être constituée de n'importe quel autre polyester d'acides gras et de polyol et/ou huile et la phase de graisse continue ayant une valeur $N_5$ de 14 au maximum et une valeur $N_{20}$ de 8 au maximum.

2. Une composition selon la Revendication 1, dans laquelle la phase de graisse continue a une valeur $N_{35}$ de moins de 2,0.

3. Une composition selon les Revendications 1 ou 2 dans laquelle la phase de graisse continue a une valeur $N_{20}$ comprise dans la gamme de 2,0 à 6,0 et une valeur $N_5$ dans la gamme de 6,0 à 11,0.

4. Une composition selon l'une quelconque des Revendications 1 à 3, dans laquelle la phase de graisse continue a une valeur $N_5$ de moins de 10.

5. Une composition selon les Revendications 1 ou 2, dans laquelle la phase de graisse continue a une valeur $N_5$ de plus de 10.

6. Une composition selon l'une quelconque des Revendications précédentes dans laquelle le rapport en masse dans la phase de graisse continue entre lesdits un ou plusieurs polyesters d'acides gras et de polyol et lesdites triglycérides s'étend à l'intérieur de la gamme de 10:90 et 75:25.

7. Une composition selon l'une quelconque des Revendications précédentes dans laquelle la contribution des solides à la valeur $N_{20}$ par lesdits un ou plusieurs polyesters d'acides gras et de polyol est au moins de 50 %.

8. Une composition selon l'une quelconque des Revendications précédentes dans laquelle les triglycérides présents dans la composition comprennent au moins 80 % en masse d'une huile triglycéride qui est complètement liquide à 5° C.